# EUROPEAN PATENT APPLICATION

(11) **EP 4 079 203 A1**
(43) Date of publication of application: **26.10.2022**
(21) Application number: 21169971.5
(22) Date of filing: 22.04.2021
(51) Int. Cl.: A47J 47/10, B65D 81/24, B65D 51/16

(54) **REUSABLE STERILE CONTAINER SYSTEM AND METHOD FOR PRESERVING FOOD**

(71) Applicant: IcoFlex Sàrl, 1015 Lausanne VD (CH)
(72) Inventor: KÄUPER, Peter, 1003 Lausanne (CH); MOSSIER, Evan, 1004 Lausanne (CH); ROSSI, Nathanaël, 1110 Morges (CH); SOLIGNAC, Dominique, 1305 Penthalaz (CH); KELLER, Matteo, 6517 Arbedo (CH)
(74) Representative: Odoom, Ernest

(57) **Abstract**

The present invention provides for a container system for preparing pre-cooked food according to a modified atmosphere packaging process, wherein food is pasteurised in the container. The container is closed using a lid and the atmosphere within the container is modified by inserting a packaging gas into the container via a bidirectional port in the lid, the port being adapted to present a microbial barrier in a flow path for the exchange of gas between the interior and exterior of the container system until the gas in the container has reached a controlled composition. The container system also has a gas-exchange regulation unit in the port, having a body and a passage closure arrangement to either maintain the flow path or shut down the flow path thereby preventing any further gas exchange via the port. The shelf-life of the food in the container may thus be substantially extended when used as part of a MAP process. The food may be stored in the same container. The food may also be re-generated in the same container.

## Description

### TECHNICAL DOMAIN

The inventive concepts described herein relate generally to the domain of the preservation of cooked foodstuffs, and more particular to a reusable sterile container in which the food can be pre-cooked, conditioned and stored for an extended period. The same container may be used for re-generating the pre-cooked foodstuffs before serving. The inventive concepts described herein also relate to processes for pre-cooking, storing and re-generating cooked foodstuffs to the health and safety standards which are required in the catering and hospitality industries. Embodiments described herein may be used for preparation and serving of meals in a catering or other hospitality or care environment, where meals have to be prepared in advance and regenerated conveniently, all under sterile conditions.

### BACKGROUND

Several methods are known for prolonging the shelf-life of comestible products. It is the presence of different pathogens and spoilage organisms which affects the shelf-life of comestible products. In the catering and hospitality industries, it is also important to preserve the organoleptic properties of the food until it reaches the consumer's plate.

Pasteurisation is a process which has long been used for destroying or deactivating microorganisms and enzymes in food or in drinks which would otherwise cause spoilage or lead to a risk of infection for a consumer. The pasteurisation process involves treating the food product with mild heat for an appropriate length of time, usually until the food product has reached between sixty to seventy degrees Celsius and sometimes as high as up to a hundred degrees Celsius. Any heat treatment process may be used for providing the mild heat required for pasteurisation, such as water cooking, flash cooking, microwave cooking, stove cooking, frying, etc. The resulting reduction of the microbial load of the food product achieved by the heat treatment contributes significantly towards extending the shelf-life of the food product.

The heat treatment is usually followed by a cooling process. During cooling, the food product is cooled to below six degrees Celsius, which significantly slows down proliferation of any micro-organism contaminants which may have been introduced during or following the heat treatment. The cooling process is generally carried out quickly to minimise the length of time the food remains at temperatures which favour the proliferation of pathogens and spoilage organisms. The food product is then usually stored at the low temperature, again to minimise proliferation of micro-organisms.

Japanese patent publication number JPH0667339B2 discloses a cooking pot which may be used in the pasteurisation of food. The cooking pot comprises a receptacle, in which the food product is heated, and a lid to cover the receptacle. The inventor provides the cooking pot as a solution to the problem of contamination following the heat treatment process, where inadvertent opening or movement of the lid of prior art cooking pots would allow contaminants to enter the receptacle, especially where such contaminants were anaerobic bacteria, which can proliferate even in an oxygen-impoverished atmosphere. The problem is solved by providing a valve system in the lid, comprising an inlet valve and an outlet valve, configured to operate in a differential pressure valve operational mode, ensuring that pressure in the pot is released through the outlet valve during heating and air is taken in via the inlet valve during cooling. A filter is provided in the inlet valve to prevent entry of contaminants via the inlet valve during the cooling process. The valve system ensures that the pressure in the pot is kept slightly lower than the external pressure. Due to this pressure difference, the lid remains tightly fixed to the receptacle, thus ensuring that no contaminants can enter the pot. Without such a system, the lid would only be held in place by its own weight.

Aerobic microorganisms may also be a cause for discolouring of food products or for otherwise reducing their shelf-life. Vacuum containers are therefore sometimes used to significantly reduce the oxygen content in the volume between the top of the food product and the lid of the container. International patent application publication number WO2020192984A1 discloses a reusable vacuum container for packaging perishable foodstuffs. The container comprises a rigid bowl and a rigid lid having a seal for tightly closing against the bowl. The lid has a valve for evacuation and ventilation. The cooked food is placed in the bowl and a pump is attached to the valve to create a vacuum inside the container. The valve has a valve stopper to seal the container after the evacuation process. The valve provides for one-way passage of gas from the inside of the container to the outside during evacuation. The stopper may be actuated to release the valve, thus bypassing the valve function and allowing for the ventilation of the container, thereby allowing for the lid to be readily removed.

Another known technology for preserving food is to replace the residual gas in the headspace above the food product in the container by a replacement gas having a controlled composition. This technology is known as modified atmosphere packaging technology (MAP). The residual gas is replaced by a modified gas, whose composition is controlled so that the modified gas is inert, odourless and tasteless. Although the modified gas, or replacement gas, compositions usually have a low oxygen content to prevent food spoilage caused by oxidation and to inhibit the growth of aerobic organisms, in some cases the replacement gas has a composition which does include a certain amount of oxygen, for example to retain the red colour in meat packaging. The replacement gas, sometimes called a protective gas or a packaging gas, may be introduced by first evacuating any residual gasses and replacing them with the replacement gas, for example by flushing out the residual gasses with the replacement gas or by injection of the replacement gas to fill the headspace between the top of the food and the lid of the container. Nitrogen is an inert, odourless and tasteless gas which is commonly used as the replacement gas in MAP processes. Food grade nitrogen is available with purities of 98% and higher. Similarly, carbon dioxide is another tasteless, odourless gas which may be used as the replacement gas in a MAP process, preferably at concentrations of above 35%. During MAP process, every effort is made to keep harmful gasses out of the container. Australian patent publication number AU2010217118B2, for example, discloses a MAP process wherein food is heated in a container having a flexible plastic lid with a vent hole. The food is heated by microwaves until hot steam exits through the vent hole. A gas is then injected via a cannula by piercing a hole in the lid until the residual gas is replaced by a replacement gas. The hole and the vent are then sealed up.

In the process described above, at least the lid of the container is not reusable. European patent publication number EP2686815B1 discloses a reusable lid for hermetically sealing a reusable container, which can be used as a vacuum container or a pressurized container. The lid is provided with an inlet valve and an outlet valve and further has an RFID transponder, configured to measure temperature or pressure or time, built into the outlet valve. The thus-configured intelligent lid can communicate with an oven in order to control the cooking operation of the container with its food contents with respect to time, pressure and temperature. The lid electronics also includes a memory so that the container may be used to record parameters related to the logistics during transport of the food, for example travelling time, temperature profile, pressure within the container etc. The intelligent lid/container may be queried remotely to recover information related to the conditions within which the food is stored.

### BRIEF SUMMARY OF THE INVENTION

In view of the prior art, there remains a need to provide a reusable, sterile, container system for use in a modified atmosphere packaging process for extending the shelf-life of comestible products, especially pre-cooked foodstuffs, where the food is pre-cooked, stored at a chilled temperature, delivered to the place where it is to be served, re-generated and served. It is desirable for the same container system to be used for the pre-cooking of the foodstuffs as well as the chilling, the MAP process, the storage and the re-generation process. Preferably, such a container system should be compatible with standard Gastronorm format containers which are already widely used in the catering or hospitality industries, and it should be compatible with other related equipment already widely used in the domain, such as cooking ovens, regeneration units etc. The words sterile, sterilising and sterilisation, as used in the present document, refer to a reduction of microbial load to a level which is generally achievable using processes which are widely used in the industry, such as pasteurisation.

A goal of the present invention is to provide a container system which can be used for cooking or pre-cooking food within the container, thereby pasteurising the food to minimise or reduce the number of pathogens present and to extend the shelf life of the food. The same container should be usable for the process of modification of the gas atmosphere within the container for prolonged conservation of the food, preferably in a chilled environment. Additionally, at least part of the same container system should be usable for re-generating or otherwise re-heating the food before serving. The container system may be made from rigid or semi-rigid, heat-resistant materials, and is reusable, washable and may have a form which is compatible with standard, differently shaped, Gastronorm format containers (GN), which are widely used in the catering and hospitality industries. According to an aspect, embodiments described herein provide for safe, sterile, processes for pre-cooking foods, storing them, and re-generating them for consumption.

Accordingly, a container system for cooking food and/or preserving and/or regenerating or re-heating pre-cooked food is described. Advantageously, the container system has a specially designed port, in a wall or in the lid, adapted to facilitate bidirectional exchange of gasses between the exterior and the interior of the container. Parts of the container may be made from sheets or plates of rigid or semi-rigid material adapted to withstand cooking processes and sterilising processes and rigid enough for the container to maintain its form so that a residual volume for gas remains above the food during use. At least one of the sheets or plates of rigid or semi-rigid material used to make the container comprises at least one of the ports described herein.

According to a first aspect, provision is made for a port in a sheet or plate of rigid or semi-rigid material useable for fabricating a container for cooking food, the port traversing the sheet or plate from a first surface through to a second, opposite, surface of the sheet or plate, the port comprising a gas-exchange regulation unit. Advantageously, the gas-exchange regulation unit comprises a body, which is either hermetically mountable to the sheet or plate, about and/or within the port, or formed by a part of the sheet or plate, the body having at least one passage establishing a flow path for bidirectional gas exchange between a first end of the passage, at the first surface of the sheet or plate, and a second end of the passage, at the second surface of the sheet or plate. The gas-exchange regulation unit further comprises a passage closure arrangement, which is operable either to allow said flow path to be maintained or to prevent said flow path from being maintained thereby stopping any gas exchange through the port. Finally, the port further comprises a filter unit having at least one vent, the filter unit being mountable within said flow path, the filter unit being a sterile filter unit in that it comprises a gas-permeable microbial barrier element.

The filter unit may be hermetically mountable about or within the passage. According to some embodiments, with the filter unit thus mounted, the gas-permeable barrier element is located towards the first end of the passage, and the passage closure arrangement is configured to operate on at least a part of the passage towards its second end. In other embodiments however, with the filter unit thus mounted, the gas-permeable barrier element is located towards the second end of the passage, and the passage closure arrangement is configured to operate on at least a part of the vent in the filter unit.

Depending on which of the embodiments described above is used, different passage closure arrangements are provided. According to one embodiment where the gas-permeable barrier element is located towards the first end of the passage, the passage closure arrangement comprises a regulating cap hermitically attachable to the body of the gas-exchange regulation unit, the regulating cap having at least one through hole, the regulating cap being slidably or rotatably operable to either place the through hole in fluid communication with the passage in the body of the gas-exchange regulation unit to allow said flow path to be maintained, or to place the through hole in fluid isolation from the passage in the body of the gas-exchange regulation unit to prevent said flow path from being maintained. Otherwise, the passage closure arrangement may comprise a stopper cap hermetically attachable to the body via a screw-thread or a push-fitting, operable to stop said bidirectional gas exchange by sealing an opening of the second end of the passage when the stopper cap is screwed or pushed onto the body, similarly to the way a bottle top is attached to a bottle. When the passage closure arrangement is not attached to the body, gas can pass in either direction through the passage in the body. When operated, by screwing or pushing the stopper cap into place, the passage is closed so that there can be no more gas flow in either direction through the body of the gas-exchange regulation unit. Preferably, the stopper cap closes the passage off hermetically.

According to an embodiment, at least a part of the second end of the passage is deformable, or at least a part of the vent in the filter is deformable and configured to be operated by exerting a deforming pressure on parts of the passage or on parts of the vent to close the flow path. The passage or the vent may then be sealed where it has been deformed and closed, for example using adhesive bonding, chemical bonding, a thermoforming solution, thermo-mechanical bonding, pressure bonding, weld bonding such as ultrasonic welding, and the like, for providing a gas-tight seal.

According to another embodiment, the passage closure arrangement comprises a sticker configured to be operated by applying the sticker to the body about an opening of the second end of the passage or by applying the sticker to the filter unit about an opening of the vent, said application being done using any of the processes which provide a gas-tight seal.

According to other embodiments, instead of using a sticker, a plug may be inserted, into the passage or into the vent to seal the passage or the vent. The plug may be made from a solid material, inserted, by screw fitting or by push fitting, into the passage or into the vent and sealed using any of the processes which provide a gas-tight seal, or the plug may be a viscous sealant material, which preferably hardens once deployed, thereby creating a gas-tight seal. Viscous sealant materials may include adhesives which set after deployment.

According to yet another embodiment, the passage closure arrangement comprises at least a part of a substantially tubular gas connector for receiving delivery of a gas from a gas source or for evacuating gas away from the container system, the gas connector being configured to be connected to an opening of said second end of the passage or to an opening of said vent, operable by insertion of a plug of solid material or a plug of a viscous, hardening, sealant material into the gas connector, to seal the gas connector.

According to still another embodiment, the passage closure arrangement comprises at least a part of a substantially tubular gas connector for receiving delivery of a gas from a gas source or for evacuating gas towards a gas sink, the gas connector having at least a part which is sufficiently deformable to allow a part of the tube to become closed when a deforming pressure is exerted, the gas connector being configured to be connected to an opening of said second end of the passage or an opening of said vent, respectively, operable by exertion of a deforming pressure on parts of the gas connector to close and seal at least a part of the gas connector through adhesive bonding, chemical bonding, weld bonding or clamping together parts of the gas connector. The gas connector may be part of a system used for any of the steps involved in the MAP process.

According to a second aspect, a lid system is provided for covering a receptacle for receiving food in a container system for cooking the food and/or preserving and/or regenerating or re-heating pre-cooked food, the lid system comprising at least one port as described above.

According to a third aspect, a container system is provided for cooking food and/or preserving and/or regenerating or re-heating pre-cooked food, the container system comprising a receptacle in which to receive the food, a lid to cover the receptacle thus providing a closed container configuration having an interior and an exterior, and a gasket configured to provide a seal at an interface between the lid and the receptacle when the container system is in the closed container configuration. The container system comprises at least one port either on the lid or on a wall of the receptacle. Advantageously, the port is a port as described above.

According to a fourth aspect, provision is made for a method for preserving food in a container system as described above, the method comprising placing the food in the receptacle, heating the food and the receptacle for a length of time and at a temperature which are suitable to substantially reduce a microbial load within the receptacle, subjecting the lid, the filter unit, the body of the gas-exchange regulation unit and/or the passage closure arrangement of the gas-exchange regulation unit to a process which substantially reduces a microbial load of the lid, the filter unit, the body of the gas-exchange regulation unit and/or the passage closure arrangement of the gas-exchange regulation unit, ensuring that the heated receptacle is closed by the treated lid and that a flow path for bidirectional gas-exchange through the gas-exchange regulation unit is established, and cooling the food and the container system to a temperature which substantially maintains the microbial load within the receptacle at said reduced level.

According to an embodiment, the method further comprises modifying a composition of a residual gas in the interior of the container system by introducing into the interior of the container system, via the first port, a packaging gas having a controlled composition, and operating the passage closure arrangement of the gas-exchange regulation unit to prevent said flow path from being maintained thereby stopping any gas exchange via the passage.

According to yet another embodiment, using embodiments of the container which have a gas connector, the operating of the passage closure arrangement to stop gas exchange via the passage, described above, is done while a positive differential pressure exists between the interior of the container system and the exterior of the container system.

The port of the present invention has the effect of allowing gasses to escape from the container system during cooking. The port may serve during a cooling step of a pasteurisation process, where pressure equilibrium between the exterior and the interior of the container system may be achieved through passage of gas from the external environment through the port. The port may also be used to inject a cooling gas into the container system. The port may also serve for evacuating residual gasses from the container system as well as for injecting, or otherwise introducing, a packaging gas during a modified atmosphere packaging (MAP) process for preserving the food. The port may be located at any convenient place in the container system. In one embodiment, the port may be on a wall of the receptacle, above the level of the food. In a preferrable embodiment, the port may be located on the lid.

Preferably, in the container system described herein, the gasket should provide a gas-tight seal. With the lid in place, bidirectional gas exchange between the interior of the container system and the exterior of the container system may thus occur only via the port.

Depending on the embodiment, the body of the gas-exchange regulation unit may be a single part, or the body may be made up of a plurality of body elements. Together, the body elements make up the body, with at least one through passage. The body may be mounted at the port or within the port. Thus, a flow path for bidirectional gas exchange is established, the flow path going through the body thanks to the passage or passages in the body.

According to an embodiment, the port is represented by a simple opening in the lid or in a sidewall of the container. The body of the gas-exchange regulating arrangement would then be mounted on one or the other side of the port and/or within the port if the port has a sufficient thickness. The body may otherwise pass through the port and occupy parts of both sides of the port. According to another embodiment, the port may be adapted, for example, by having a modified form such as by having a neck or a collar around the opening in the lid, or on the sidewall of the recipient if the port were on the sidewall, the collar having a certain height extending past the surface of the lid or sidewall, like a short chimney. In this case it is this neck or collar which represents the body of the gas-exchange regulation unit. The body, in this case can be said to be formed by a part of the sheet or plate within which the port is fashioned. With this type of body, gas-tightness between the body and the port is automatically assured since the port is a continuation of the same material from which the lid or the sidewall is made. With the first type of port, where the body is a separate part or group of elements which have to be mounted about or within the port, the body has to be mounted in a gas-tight manner.

Different attachment types are possible for achieving gas-tight attachments described herein, such as welding, adhesive attachment, push-in fitting, screw-in fitting with an internal or external thread, etc., as long as it provides a gas-tight seal. By operating the passage closure arrangement, the bidirectional gas-exchange capacity of the passage can be brought from full capacity to substantially zero.

The sterile filter unit described herein is for preventing pathogens or microorganisms from crossing the port. A sterile filter is a filter which lets gas pass through but filters pathogens and microorganisms. The filter unit is mounted, in a gas-tight manner, within the flow path. To be in the flow path, the filter unit may be mounted about the port or within the port, about or within the passage in the body of the gas-exchange regulation unit or, depending on the embodiment, within or around the passage closure arrangement. The filter unit may comprise a filter housing, or support, and a gas-permeable microbial barrier element, making the filter unit a sterile filter unit.

The gas-exchange regulation unit allows for bidirectional gas exchange between the exterior of the container system and the interior of the container system. Since the filter unit is installed in the flow path for the bidirectional gas exchange, such gas exchange must go through the gas-permeable microbial barrier element. Thus, sterile conditions are assured during the process of modification of atmosphere in the container (MAP). After completion of the modification of the atmosphere within the container, the passage closure arrangement of the gas-exchange regulation unit can be operated to reduce the gas exchange capacity of the port substantially to zero, thus maintaining whatever atmosphere is in the container, usually a gas having a controlled composition to prolong the shelf life of the food in the container.

Any residual gasses in the container after the pasteurisation process may be replaced by a packaging gas having a controlled composition during the MAP process while maintaining the sterility of the food inside the container, thanks to the sterile filter unit in the flow path. Furthermore, the packaging gas can be safely sealed inside the container by operating the passage closure arrangement to seal the passage in the body of the gas-exchange regulation unit so that gasses can no longer pass through the port.

According to an embodiment, the gas-exchange regulation unit further includes electronics, including a sensor for measuring one or more parameters, such as the temperature inside the container, the pressure inside the container, different times related to how long certain conditions have been maintained within the container, instantaneous time, humidity level inside the container, the gas composition within the container, a level of light, a vibration level, a geographical position, an orientation, an inclination or a geographical displacement., for example The electronics may also comprise wireless communication features for communicating with a processor, for example, for reporting the recorded measured conditions to the processor outside of the container system.

According to some embodiments, reducing the microbial load of the gas-exchange regulation unit and the lid may be done automatically by leaving the lid and the gas-exchange regulation unit, with its passage closure arrangement operated or otherwise set to maintain the flow path in the body of the gas-exchange regulation unit, on the receptacle during the heating part of the pasteurisation process. In other embodiments, the sterilising of the parts of the gas-exchange regulation arrangement and the lid may be done separately from the sterilisation of the food and the receptacle, for example by heating, using steam, using ultraviolet radiation or chemically, with the lid and open gas-exchange regulation arrangement then being placed on the already sterilised receptacle prior to, or as part of, the cooling process. In embodiments where any part of the gas-exchange regulating unit is not left on the container system during the heating step of the pasteurisation process, arrangement is always made for at least the filter unit to remain in place during the heating step. This way, when the rest of the gas-exchange regulating unit is attached, for example during the chill process or prior to the chill process or even after the chill process, there is no risk of contaminating the food. In such embodiments, it is generally the body and the filter unit that remain in place, with the passage closure arrangement being sterilised separately. After the cooling or chill process is over, the passage closure arrangement may be operated to prevent the flow path from being maintained. Whenever the lid is sterilised separately, it should be replaced before the chill process begins.

According to yet still another aspect, a method is provided for re-generating pre-cooked food or the preserved food described above, comprising either: operating the passage closure arrangement to cause it to maintain the flow path through the body of the gas-exchange regulation unit, or removing the passage closure arrangement; or removing the lid; and providing a heating process to the receptacle until the food has reached a temperature of between sixty degrees Celsius and a hundred degrees Celsius.

Thus, a container system having at least one port, preferably in its lid, provides advantages to the hospitality and catering industries where strict hygiene rules are to be adhered to, without requiring the use of an additional valve at the port. By providing for appropriate gas-exchange regulation, as described, the bidirectional port serves as a pressure release means during cooking, while also serving to equalise the pressure differential between the interior and the exterior of the container during cooling of the food while maintaining the sterile condition of the food inside due to the sterile filter mounted within the flow path in the body of the gas-exchange regulation unit. The sterile filter also guarantees that the food remains sterile during the gas exchange processes as part of the MAP process, so that the food may be preserved over an extended period before subsequent re-generation of the food in the same container.

### BRIEF DESCRIPTION OF THE DRAWINGS

The inventive concepts described herein will be better understood thanks to the detailed description which follows and the accompanying drawings, which are given as nonlimiting examples of embodiments of the inventive concepts, namely:
figure 1, illustrating a sectional view of a first embodiment of the container system described herein, in which the gas-exchange regulation arrangement includes a passage closure arrangement operable to be screwed down onto a part of the gas-exchange regulation body at the port to place it in a closed position preventing any gas exchange via the passage;
figure 2, illustrating another view of the embodiment of the container system illustrated in figure 1;
figure 3a, illustrating a sectional view of an embodiment of the container system described herein having a gas-exchange regulation arrangement comprising a passage closure arrangement embodiment having parts which move against each other to open and close the flow path for bidirectional gas exchange through the port;
figure 3b, illustrating the embodiment of the container system shown in figure 3a but with the gas-exchange regulation arrangement in an open configuration;
figure 4, showing another view of the embodiment shown in figure 3b;
figure 5, illustrating a sectional view of another embodiment of the container system described herein, in which the gas-exchange regulation arrangement includes a passage closure arrangement which can be operated to prevent maintenance of the flow path by pinching and sealing a part of a gas connector, which may form part of the passage closure arrangement;
figure 6, showing a different view of the embodiment shown in figure 5;
figure 7, illustrating a sectional view of another embodiment of the container system described herein, having an electronic sensor component in the gas-exchange regulation unit;
figure 8, showing a different view of the embodiment shown in figure 7;
figure 9, showing a sectional view of another embodiment described herein, where the port has a shape which is adapted to receive the filter unit and the gas exchange regulation unit includes an electronic sensor component;
figure 10, showing a different view of the embodiment shown in figure 9;
figure 11, showing a sectional view of an embodiment of the container system where the gas-exchange regulation unit includes a passage closure arrangement which is operable to prevent maintenance of the flow path by pinching and sealing a part of a gas connector, which may form part of the passage closure arrangement, or which may form part of the filter unit;
figure 12, showing a different view of the embodiment shown in figure 11;
figure 13, illustrating a sectional view of an embodiment, in which the gas-exchange regulation arrangement is shown with its passage closure arrangement operated to prevent maintenance of the flow path by having a sticker attached over a passage in the filter unit, which is attached to the body;
figure 14, showing a different view of the embodiment shown in figure 13; and figure 15, illustrating an exploded view of a filter unit which could be used within gas-exchange regulation units of embodiments described herein.

### DETAILED DESCRIPTION

Embodiments of a container system described herein may be used in any of the modified atmosphere packaging (MAP) processes generally used within the catering or hospitality industries. During a MAP process, pre-cooked food is sealed in a sterile container and the residual gas in the container is replaced by a replacement gas so that the volume inside the container, between the top of the food and the lid, is filled with a gas having a controlled composition, engineered to extend the shelf life while also maintaining the organoleptic properties of the food.

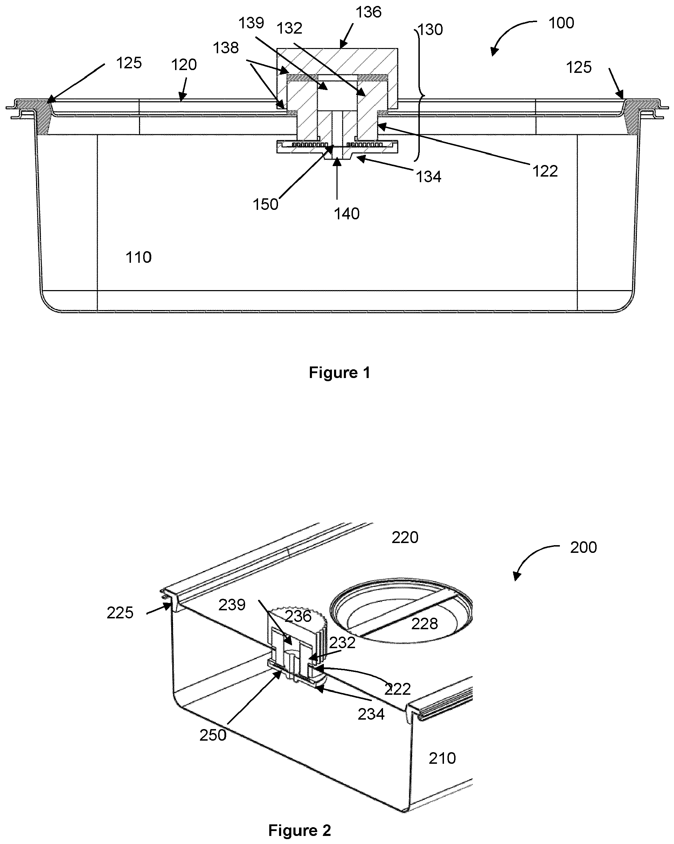

Figure 1 shows an embodiment of the container system (100) for sterilising food, usually in a pasteurisation process including applying heat to the food, which usually cooks the food, sterilising it by reducing the microbiological burden of the food and its container. The pasteurising process may further include a cooling process. As will be described later, the container system (100) may also be used for preserving the food when used in a MAP process, and for re-heating or otherwise regenerating the pre-cooked food. The container system (100) comprises a receptacle (110) in which to receive the food and a lid (120) for closing the receptacle. The container system also has a gasket (125) to create a gas-tight seal when the lid is on the receptacle. The receptacle with the lid on can be described as a container, in a closed configuration, thus defining a volume which can be considered to be the interior of the container and a volume which can be considered to be the exterior of the container. Figure 2 shows a different view of the container system (200) shown in figure 1 (100). In figure 2, a handle (228) for lifting the lid is visible. In this embodiment, the lid has a port (122, 222). The port essentially comprises a hole in the lid. In other embodiments, the port may be in a sidewall of the receptacle (110, 210). The port also has a gas-exchange regulation unit (130) having either an open or a closed configuration to alternatively allow or prevent bidirectional gas-exchange between the exterior and interior of the closed container system via the port. In figures 1 and 2, the port is made from a hole in the lid and the gas-exchange regulation unit (130) comprises a body (132, 232) having a passage (139) through it, to create a flow path for bidirectional gas-exchange via the port. The body is attached within and around the port in this embodiment and a passage closure arrangement (136, 236) is attached to the body (132, 232). The purpose of the passage closure arrangement is to allow for a flow path to be established for the bidirectional gas exchange between the exterior and the interior of the container system. The passage closure arrangement has at least one passage for the gas exchange, the passage extending from one end to the other through the arrangement. For a lid of a container system or for a sidewall of a receptacle of a container system, made from a sheet or plate of a rigid or semi-rigid material, the passage would have a first end at a first surface of the sheet or plate and a second end at a second surface of the sheet or plate, opposite the first surface. For example, from the inside surface of the lid to the outside surface of the lid. The arrangement is operable to either leave the flow path open or to prevent any gas exchange through the flow path. In the embodiment, the passage closure arrangement is realised by a simple, screw-down stopper or cap, like a screw-top for a bottle, for example. When the cap is off, the gas-exchange regulation unit is in its open position and the flow path which was established in the passage is maintained. When the cap is screwed down onto the body, the flow path is closed, and no gas-exchange is possible via the port. In other words, any maintenance of the flow path is prevented when the passage closure arrangement is operated by screwing it down onto the body. Of course, when the arrangement is operated by removing it from the body, the flow path is maintained. In this embodiment there is a filter unit (134, 234) attached to the body of the gas-exchange regulation unit, on the inside of the lid. The filter unit comprises a gas-permeable microbial barrier element (150, 250) hermetically mounted to a filter housing, for example by ultrasonic welding methods. Gas-tight seals (138) are shown in figure 1, providing gas-tight seals between the body of the gas-exchange regulation unit and the port and between the passage closure arrangement and the body of the gas-exchange regulation unit. According to an embodiment, the microbial barrier element may be a microporous polymer membrane, for example. Other types of microbial barrier elements are known.

The receptacle (110, 210) and the lid (120, 220) may be made of any rigid or semi-rigid material which is waterproof, can withstand temperatures used in cooking the food and can withstand sterilising conditions which may be used to sterilise the lid and the receptacle so that they may be reused. Sterilising conditions include being subjected to certain sterilising chemicals, being subjected to high temperatures or being placed in an environment with high pressure and/or high humidity and/or high temperature. Other sterilising techniques include the use of ultraviolet light. Examples of suitable materials for the receptacle and the lid of the container system include metals (e.g., stainless steel), plastics, enamelled materials or multi-layered materials. The material for the receptacle and the lid should be able to withstand temperatures of up to 180 degrees Celsius, preferably up to 220 degrees Celsius. By rigid or semi-rigid, it is meant that the container should be resistant to compression, enough to be able to maintain a residual gas volume above the food during the cooking process, the different steps of the MAP process and the regenerating process. Depending on different embodiments, described below, some parts of the gas-exchange regulation unit may be made of materials which can withstand temperatures in cooking the food and which can withstand sterilising conditions used to sterilise the rest of the container system. In some embodiments the filter unit is removable and may be discarded and replaced between successive uses of the system. In some embodiments, the filter unit is comprised within the passage closure arrangement and at least part of the passage closure arrangement, including the filter unit, is removable and may be discarded and replaced between successive uses of the container system.

The container system (100) further comprises a gasket (125) to provide a hermetic seal where the lid and the receptacle meet. The gasket (125) may be made of silicone or polytetrafluoroethylene (PTFE) for example or any other soft polymer which is resistant to the temperatures and sterilising environments mentioned above to which the container system may be subjected during use. The gasket may be a separate, stand-alone gasket, designed to go around the joint between the lid and the receptacle, or it may be integrated in the lid or on the lip of the receptacle where the lid and the receptacle meet. According to an embodiment, in order to ensure that the lid stays on during any process which may lead to an increased pressure inside the closed container, a clamp may additionally be used to keep the lid tightly secured to the receptacle, thereby providing the required hermetic seal, ensuring that the interface between the lid and the receptacle remains gas-tight.

Embodiments of the container system exist where the port is located on the receptacle, above the level of the top of the food. In a preferred embodiment, the port is located on the lid. As illustrated in figure 1, the lid (120) comprises a port (122) for gasses to be able to pass from one side of the lid to the other, or from the inside of the container system to the outside of the container system. The port may have a substantial thickness, for example if the material of the lid has a substantial thickness. Otherwise, the port may have a certain thickness or height, thicker than the thickness of the material of the lid, resembling a tube, and extending past either, or both of, the top surface of the lid, towards the exterior of the container, and the bottom surface of the lid, towards the interior of the container. A collar may thus extend beyond the top of the lid, at the port, which may facilitate the attachment of certain other parts of the system or any tools that may need to be attached to the port during any of the processes to which the container system may be subjected, such as one or more steps of the MAP process. To facilitate such attachment, the collar may be threaded for example, for gas-tight attachment. Instead of using a thread, attachment to the port may be made using push-in fittings, as long as they allow for a gas-tight attachment.

The port (122) is for bidirectional gas exchange between exterior and interior of the container system. In order to control the flow of gas during these exchanges, the port includes a gas-exchange regulation unit (130). The gas-exchange regulation unit comprises a body, which has at least one passage through it (139) to allow for a flow path for the bidirectional gas exchange to be established. Gas can thus be exchanged in either direction, via the port, between the exterior and interior of the container system. The gas-exchange regulation unit also has a passage closure arrangement, attachable to the body, for either allowing the flow path to be maintained or to prevent maintenance of the flow path or otherwise close the path off. This arrangement may be a screw cap, for example, with the screw cap being attachable to the body via compatible threads on the cap and on the body. When the cap is not attached, the flow path is maintained. When the cap is screwed down onto the body, it closes the passage (139) and gas exchange via the port is prevented. Instead of a screw-down closure cap, the passage closure arrangement may be realised as a push-down cap, as long as the cap forms a gas-tight seal against the body to ensure that the passage is properly closed when the arrangement is operated to prevent gas exchange through the passage.

The gas-exchange regulation unit can therefore be said to have two configurations. In the first configuration, the flow path for bidirectional gas exchange through the port is maintained. This is the open position of the gas-exchange regulation unit. In the second configuration the gas exchange capacity of the passage is reduced to substantially zero. This is the closed position of the gas-exchange regulating unit. In all embodiments, when the gas-exchange regulation unit is in its closed position, the flow path is hermetically sealed and neither gas nor microorganisms can enter the container system.

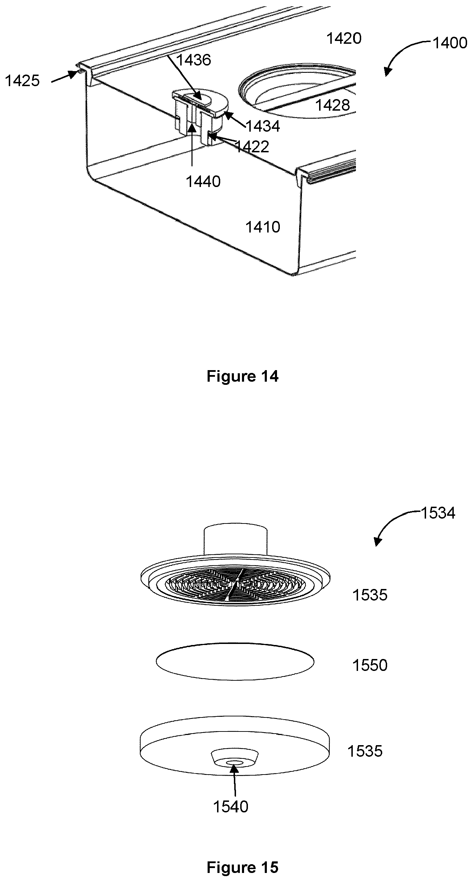

The container system further comprises a sterile filter unit (134). Figure 15 shows an example of a sterile filter unit which may be used in different embodiments of the invention. The sterile filter unit (134, 234, 1534) comprises a filter housing (1535) and a gas-permeable microbial barrier element (150, 250, 1550). The sterile filter unit has an opening, or a vent, (140, 1540) for the gas. Since the filter unit is a sterile filter unit, it must be impermeable to any pathogens or spoilage microorganisms which could contaminate the food. It follows that the filter element, the microbial barrier element (150, 250, 1550), should be hermetically mounted to the filter housing (1535). Because of the microbial barrier properties of the filter unit (134, 234, 1534), no microorganisms can pass through. The sterile filter should filter particles of between 0.1 microns to 0.45 microns. Sterile air filters which have microbial barrier properties are known in the field.

According to embodiments which feature a screw-down cap as a passage closure arrangement, or even a push-down cap, the sterile filter unit (134) may be mounted at or around the port. More specifically, the cap is preferably mounted to the body of the gas-exchange regulation unit and configured to be able to seal an end of the passage, usually the end which is towards the exterior of the container system. For embodiments where the port has a collar, the collar represents the body of the gas-exchange regulation unit. In this embodiment, the filter unit is generally mounted with its microbial barrier element located towards the interior of the container. The filter unit must be mounted in a gas-tight manner. This can be done by attaching the filter holder to the lid, or within the passage of the body or to the body, by adhesive bonding or welding, for example by spot welding or ultrasonic welding, or by screw-fitting or push-fitting. According to some embodiments, the microbial barrier element may be removable and interchangeable, while in other embodiments, the complete filter unit may be removable and interchangeable. The microbial barrier element can be any filter element which has microbial barrier properties in that it blocks particles of between 0.1 microns to 0.45 microns, which includes pathogens and spoilage microorganisms which have a negative effect on the shelf-life of the food. Once the filter element and the filter housing are in place and the lid is mounted on the container, the container system is fully sealed and the only passage for gas is through the microbial barrier element.

A method for cooking and/or preserving food is now described, the method using any of the container systems described herein. The method may also be used for sterilising and preserving food. The food to be cooked and/or preserved is placed in the receptacle of the container system and both the food and the receptacle are heated to the required temperature for the required time for pasteurisation to occur. Different times and temperatures are known to achieve pasteurisation. Preferably, the temperature should be above 60 degrees Celsius. Generally, in order not to impair the taste of the food, the temperature is kept below 70 degrees Celsius. However, it is possible for temperatures of up to 100 degrees Celsius to be used. The length of time through which the food is maintained at the raised temperature may vary between 15 seconds and 30 minutes, for example, depending on the temperature. There are also situations where high levels of heat do not impair the taste of foods. In these cases, pasteurisation may simply be achieved through the normal cooking process, at even higher temperatures than those given above.

Biochemical action resulting from the raised temperature used in the cooking causes the microbiological burden of the food and the receptacle to be reduced, making the food safe for human consumption. The lid and the gas-exchange regulation unit are also sterilised. This may be done by placing the lid on the receptacle during cooking, with the passage closure arrangement operated to maintain the flow path for bidirectional gas exchange through the port, or by simply placing the lid in the same environment as the receptacle during the heating process thus heating the food and the lid together without the lid being placed on the receptacle. Such a process requires that the gas-exchange regulation unit, including the body, the passage closure arrangement and the filter unit be able to withstand the raised temperatures involved in the cooking or pasteurisation. Otherwise, the lid and gas-exchange regulation unit may be sterilised separately, using any known sterilisation method. The lid and gas-exchange regulation unit must be able to withstand the environmental conditions imposed by the chosen sterilisation method. Where the heating process is performed while the lid is on the receptacle, the gas-exchange regulation unit is placed in its open configuration, where gasses are allowed to pass from the interior of the container system to the exterior via the passage in the body of the gas-exchange regulation unit due to the raised pressure within the closed container system during cooking. According to some embodiments, the passage closure arrangement need not be attached during cooling, but rather may be attached after the chill process described below. More specifically, in embodiments where the filter unit is mounted about or within the passage, or passages, in the body of the gas-exchange regulation unit, the passage closure arrangement may be attached or otherwise engaged without sterilisation since the filter ensures that there is no risk of contamination from the passage closure arrangement.

At the end of the heating process, the chill process begins. This is performed with the lid on the receptacle and the gas-exchange regulation unit placed in the open configuration with the passage closure arrangement operated to allow the flow path for gas-exchange to be maintained. As the food in the container system cools, ambient gas from the exterior of the container flows to the interior of the container system via the gas-exchange regulation unit in the port to maintain pressure equilibrium between the interior and exterior of the container system. Thanks to the sterile filter in the flow path, pathogens and/or microorganisms are prevented from entering the container system during cooling. Cooling may be done either by leaving the container system in the same environment where it was cooked, or preferably by placing the container system in a cooler environment. Cooling gas may be forced into the container via the port to accelerate cooling. Thus, due to the bidirectional nature of the port, the port can be used for letting gasses escape from the container and/or for allowing gasses to enter the container, as necessary.

According to an embodiment, the system comprises a further port with a further gas-exchange regulation unit so that the cooling gas can be flushed through the container system to cool the food down quickly. Flushing with a cooling gas may be done as part of a MAP process where the atmosphere at the interior of the container system is modified using a gas having a controlled composition. In this case, the cooling gas may be the gas having the controlled composition or the gas having the controlled composition may be flushed through the system between the first port and the further port just after the cooling gas. Preferably the food is cooled to below 6 degrees Celsius and stored at the cooled temperature. Whether the chill process is performed by allowing the container to stand in a cooling atmosphere or by flushing with a cooling gas as described above, it is always possible to use the first port and the further port to achieve the modification of the atmosphere within the container system through flushing using a gas having a controlled composition.

According to an embodiment, the MAP process may first involve removing all or part of the residual gas from the interior of the container system, thus creating a vacuum, or partial vacuum, within the container system. A gas exchange line from a machine for supplying gas or for evacuating gas may be attached to an opening in the body of the passage closure assembly of the gas-exchange regulation unit for this purpose. The gas exchange line may be a tube or pipe, which is attached using a screw thread or a push-fit onto the body. The body may be comprised of one or more parts or elements mounted to or within the port, with a passage for gas-exchange. In embodiments where the port is shaped to form a collar or neck, it is a part of the sheet or plate forming the lid or sidewall which forms the body of the gas-exchange regulation unit of the port. When the desired level of vacuum is achieved, a valve in the machine may be switched to cause a packaging gas to be pumped into the container system via the same gas exchange line. The packaging gas has a controlled composition such that the atmosphere in the container when the process is over is either reduced in oxygen or enriched with nitrogen or enriched with carbon dioxide for example.

Instead of first pumping residual gas out of the container system, according to some embodiments, the packaging gas may be forced under pressure into the container system via the gas exchange line then the pressure in the container system may be allowed to reduce, leaving a modified atmosphere in the container system. This process may be repeated multiple times until the required gas composition is reached inside the container system.

Another way to modify the atmosphere in the container is to leave the container, either with the lid on and the gas-exchange regulation unit in its open position, in a chamber which has an environment with a gas having a controlled composition, possibly under increased atmospheric pressure. The process may be done in batches, with many containers being processed in a batch in the chamber. Similarly, for evacuating a batch of containers at once, they can be placed in a chamber with their lids on and their passage closure arrangements operated to put them in the open position, then the pressure in the chamber may be reduced until the containers reach the required level of vacuum, before then introducing the packaging gas if necessary. Cooling processes may be performed in a chamber with cooling gas, possibly under pressure, the container systems having their gas-exchange regulation units configured to maintain their flow paths for bidirectional gas exchange or having their lids removed.

After changing the gas composition inside the container system, the gas-exchange regulation unit may be placed in its closed position by operating the passage closure arrangement to prevent gas exchange via the passage.

As discussed below, several other, different, embodiments of passage closure arrangements are possible. Depending on which embodiment of passage closure arrangement is used in the gas-exchange regulation unit, the passage closure arrangement may be operated while the atmospheric pressure at the interior of the container system is higher than the atmospheric pressure at the exterior of the container system. In such cases, it is possible to store the closed container systems with a higher atmospheric pressure inside.

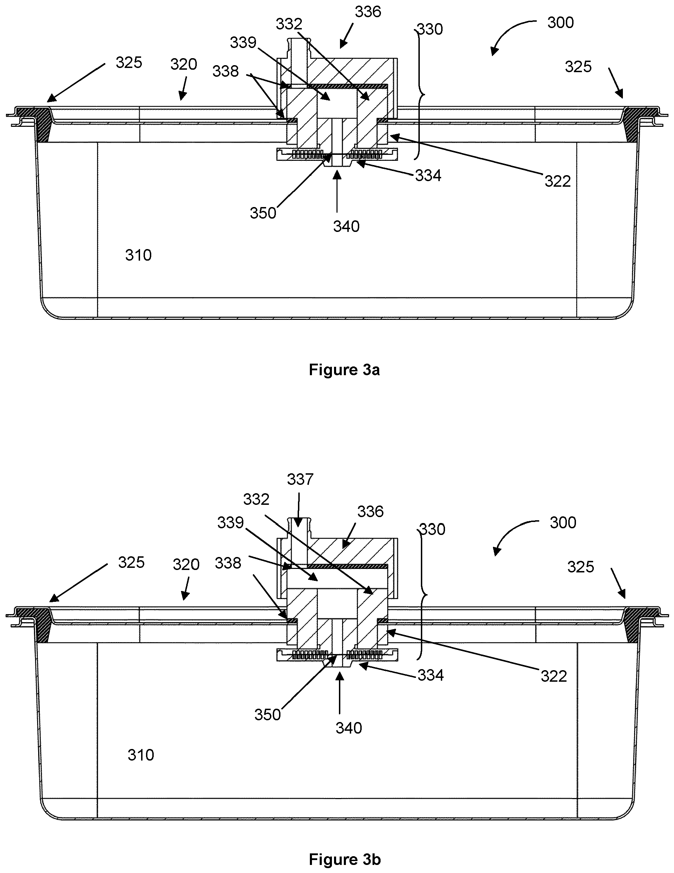

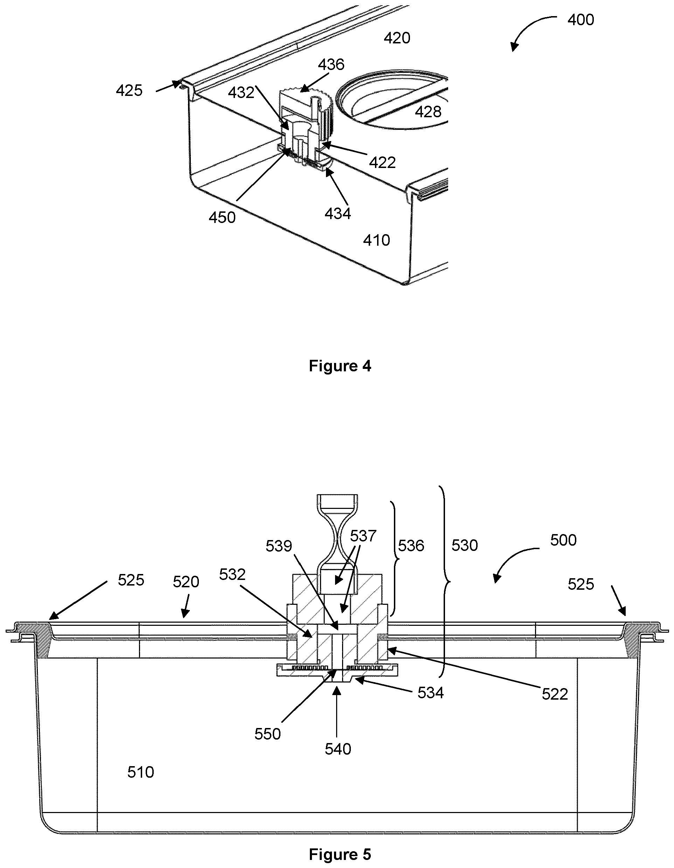

Figures 3a, 3b and 4 show an embodiment of a passage closure arrangement comprising a regulating cap (336) which is attachable to the body (332) of the gas-exchange regulation unit (330). The regulating cap has at least one through hole (337), which can either be placed in alignment with, or isolated from, the passage in the body of the gas-exchange regulation unit. By placed in alignment, it is meant the through hole is placed in fluid communication with the passage. Conversely, by isolating the passage from the though hole, the through hole can be said to be placed in fluid isolation from the passage, The stopper cap is thus slidably or rotatably operable to either place the through hole in fluid communication with the passage (339) in the body (332) of the gas-exchange regulation unit (330) or to place the through hole in fluid isolation from the passage in the body of the gas-exchange regulation unit. When the through hole is in fluid communication with the passage, the flow path for gas exchange between the interior and exterior of the container system is maintained. When the through hole is placed in fluid isolation from the passage, the flow path is no longer maintained and gas exchange via the passage is prevented. In figure 3a the through hole is shown as being sealed (338) against a part of the body of the gas-exchange regulation unit.

Figure 3a shows the arrangement with the passage in the body closed. The passage closure arrangement has at least one through hole which can either be lined up with the passage in the body or misaligned with respect to the passage in the body depending on how the arrangement is positioned relative to the body. In Figure 3a, the through hole is not in fluid communication with the passage in the body and the passage is sealed by the passage closure arrangement. The through hole can thus be said to be in fluid isolation from the passage. In figure 3b, the passage closure arrangement has been either pulled up or twisted up on a thread on the body to allow the through hole to be in fluid communication with the passage in the body, creating a flow path through the port. Thus, by twisting or sliding the passage closure arrangement against the body the flow path can be opened or closed. The flow path includes the opening, or vent (340) in the filter unit (334), through the filter element (350), the passage (339) in the body (332) and the through hole (337) in the passage closure arrangement (336). Figure 4 shows a different representation of a container system illustrated in figure 3b, showing a cross-sectional view of the gas-exchange regulation unit with its passage closure arrangement in the open position. In this embodiment, the filter unit is mounted with its filter element, the microbial barrier element, at the end of the passage which is towards the interior of the container system.

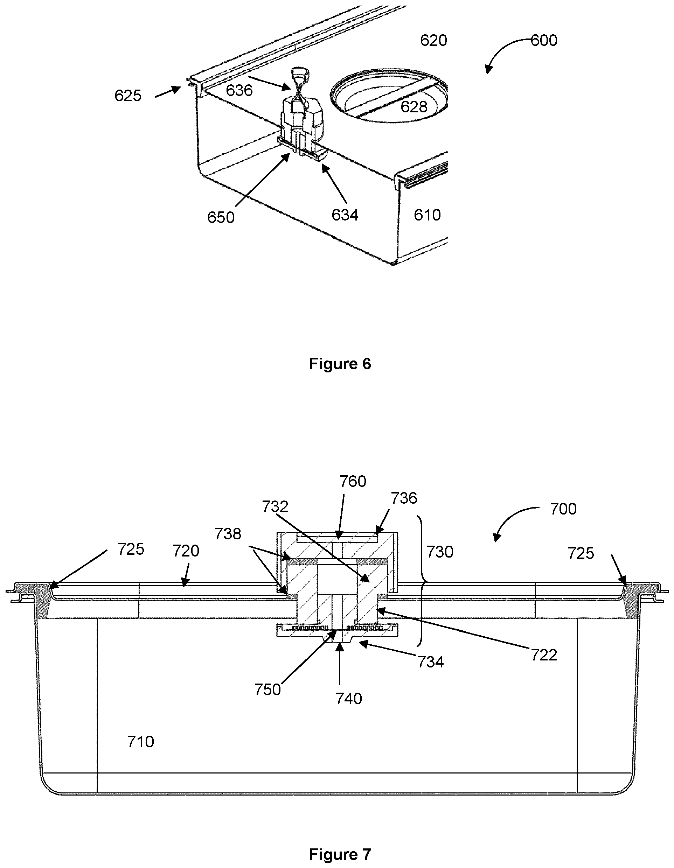

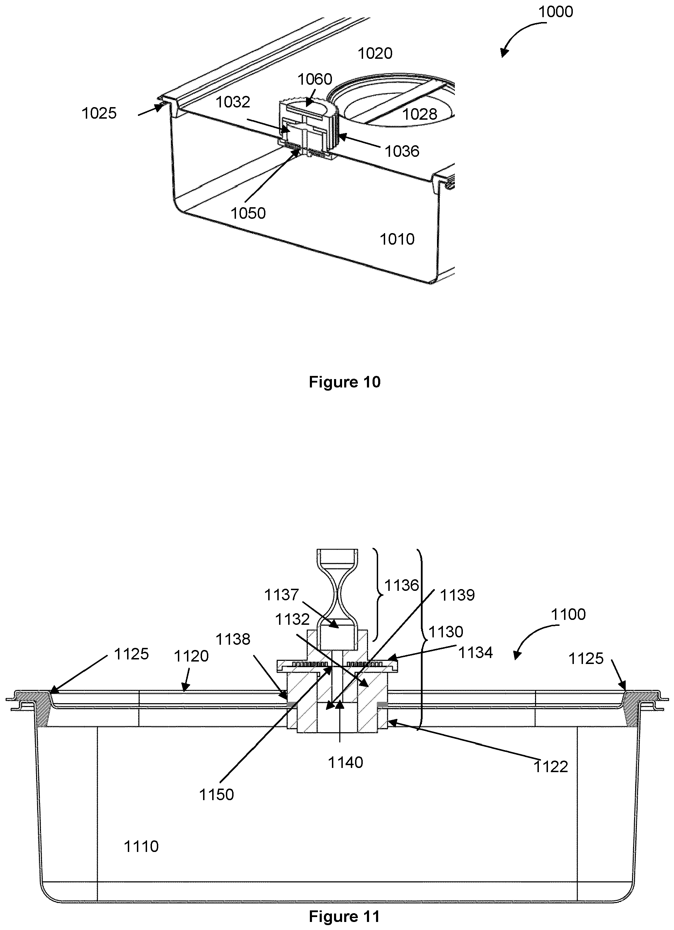

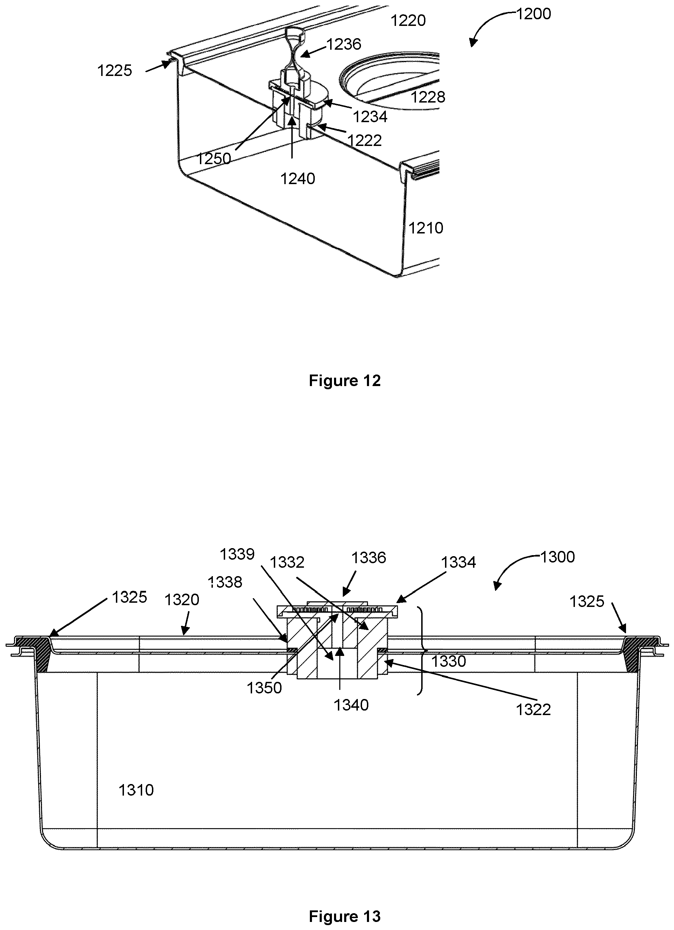

Figure 5 shows another embodiment of a container system with a different type of gas-exchange regulation unit, whose passage closure arrangement (536) comprises a short tube adapted to be attached to the body of the gas-exchange regulation unit. The tube may serve as an attachment to which a gas source may be connected, for example for receiving delivery of a packaging gas in the container or for evacuating a residual gas from the container or for receiving delivery of a cooling gas. The short tube may even have formed a part of a longer delivery pipe or evacuation pipe, which has been cut after the delivery or evacuation has been completed. The body may be adapted to receive the tube, or the end of the tube may be adapted to fit into the body or a custom adapter with a through hole may be provided to ensure that the tube fits properly to the body. In this embodiment, the filter element is located at the end of the passage towards the interior of the container system. In another embodiment, illustrated in figure 11, the filter unit is mounted to the end of the body which lies at the exterior of the container system. In this embodiment, the tube, or gas connector, is adapted to connect to a vent in the filter unit. The gas connector and the filter unit may even form a single element, which may be discarded and replaced between uses or after several uses. Figure 6 shows a different view of the embodiment shown in figure 5, while figure 12 shows a different view of the embodiment shown in figure 11. In these embodiments, the passage closure arrangement is operable by closing the gas connector. Several different mechanisms are possible for closing the gas connector. According to one embodiment, the gas connector is sufficiently deformable to allow the gas connector to be compressed and closed on itself. The gas connecter may then be sealed where it is closed, by any sealing techniques such as adhesive bonding, chemical bonding, a thermoforming solution, thermo-mechanical bonding, pressure bonding, weld bonding such as ultrasonic welding, and the like, for providing a gas-tight seal. According to another embodiment, a sealing plug may be inserted into the pipe. For example, a solid plug may be inserted into the pipe, or gas connector, to seal the pipe. Otherwise, a viscous material could be dropped into the pipe where it subsequently sets to form a gas-tight seal.

According to another embodiment, instead of having a tube as described above, it is possible to directly seal the passage by inserting a solid plug or a viscous plug as described above or to directly seal the vent in the filter unit with the solid plug or plug of viscous sealant material, depending on whether the filter unit or the body faces towards the exterior of the container system.

Instead of closing the vent or the passage using a plug, the vent or the body may be made of a material which is sufficiently deformable for the vent or the passage to be pressed shut by exerting pressure at the vent or passage, then sealing the vent or passage closed using any of the known sealing methods such as adhesive bonding, welding, for example ultrasonic welding, or by clamping or the like.

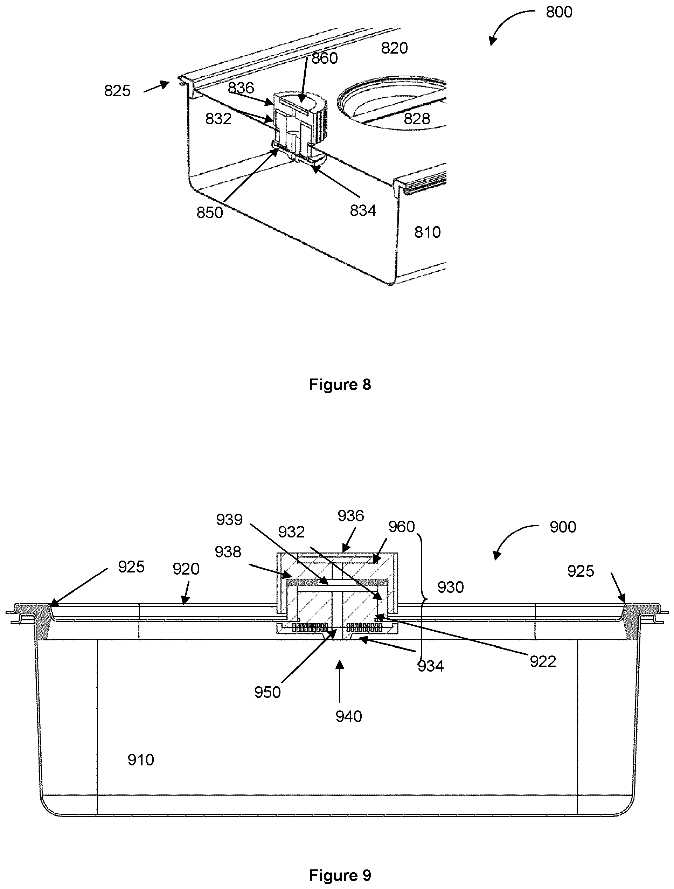

Figures 7 and 8 show an embodiment of the container system with the filter unit mounted to the end of the body of the gas-exchange regulating unit at the inside of the container. The passage closure regulating arrangement is a stopper cap as described above, the stopper cap further comprises an electronic sensor. The cap may comprise the sensor and any related electronics, including a memory. The sensor and its electronics may be configured to measure one or more environmental conditions within the container system during one or more steps of the pasteurising process, the MAP, the storage process and/or the re-generating or reheating process. The measurement results may be stored in the memory. The electronics may further comprise a wireless communications module to provide the measured environmental parameters to a computing system outside of the container. For example, the sensor may measure temperature inside the container during cooking or during storage or regeneration; or to measure a time value, for determining an instantaneous time; or to measure a time duration for determining how long the container and its contents were kept at a certain temperature for example; or to measure a humidity or a pressure or a gas composition or a level of light or a shock level or a level of vibration or a geographical position or an orientation or an inclination or a geographical displacement, among others. The electronics may be used to log the different parameters and/or to log a standard time or an instantaneous time. The electronics may further include communications solutions using wireless standards such as NFC or Bluetooth, for example. The electronics may include a battery or may be battery-less, using power harvesting, such as RFID harvesting. Embodiments for use in situations where high temperatures are used during cooking do not contain sensors.

In embodiments where the filter unit is mounted about or within the passage in the body of the gas-exchange regulation unit, the passage closure arrangement may be attached or otherwise deployed after the chill process without having a negative impact on the sterility of the system. Accordingly, an embodiment is now disclosed having its filter mounted about or within the passage of the body of the gas-exchange regulation unit and a sensor and its related electronics comprised within the passage closure arrangement of the gas-exchange regulation unit. A method for preserving food using this embodiment comprises placing, or otherwise deploying or attaching, the passage closure arrangement after the chill process. In this embodiment, the container system may readably be used to monitor conditions in the container system after the pasteurisation process, during storage and transport, during delivery to a customer, and during stockage at the customer's premises before regenerating the food because the sensor and electronics need never be subjected to damaging heat processes during these stages. This embodiment provides a way to monitor and record the conditions under which the pasteurised or otherwise sterilised food has been kept during storage, thus allowing for verification that health and safety standards were respected during storage and transport of the food.

Figures 9 and 10 show an embodiment of the container system where the port comprises a collar. The filter unit is attached into the collar of the port with the filter element towards the interior of the container system. The stopper cap is screwed down onto the collar, which represents the body of the gas-exchange regulation unit. The stopper cap comprises an electronic sensor and related electronics.

In embodiments where the passage closure arrangement comprises a gas connector, and in embodiments where a gas connector can be attached to the gas-exchange regulation unit, for delivering gas, it is possible to develop a surplus pressure within the container system when delivering the packaging gas before sealing the passage closure arrangement shut.

In embodiments where the through hole or the gas connector become permanently sealed when the passage closure arrangement is operated to stop gas exchange, the passage closure arrangement may be removed, discarded and replaced between uses.

The container system may also be used for the regeneration process, where the food is heated to the required temperature for consumption.

Figures 13 and 14 show an embodiment where the passage closure arrangement comprises a sticker. In this embodiment, the filter unit is mounted to the body of the gas-exchange regulating unit with the microbial barrier element of the filter unit at the exterior of the container system. To operate the passage closure arrangement the sticker is adhered to the vent of the filter unit and sealed using any of the known sealing techniques mentioned above. In another embodiment, where the filter unit is mounted to the opposite end of the passage in the body of the gas-exchange regulation unit, the sticker may be attached to the body about the opening to the passage in the body.

Figure 15 shows an example of a filter unit which may be used in embodiments of the invention described herein. The filter unit has a filter housing or support, shown in figure 15 as comprising two parts which can be assembled together to enclose the filter element, the microbial barrier element (1550). The vent is shown in the housing for allowing passage of gas towards or from the filter element.

The container system may further include a security seal or similar indicator to let a user know whether the lid or port has been tampered with during different stages of use. For example, the gas-exchange regulating unit or the lid may have parts which have a seal which breaks when tampering has occurred, or parts which may self-destruct or exhibit altered behaviour when tampering has occurred.

Embodiments of container systems described herein, allow for foodstuffs to be pasteurised through a heating process while the food is in the container's receptacle. By using processes which ensure that the food, the receptacle, the lid, the sterile filter and the cap are all remain sterile up to the end of the pasteurising process, the system's design ensures that no pathogens or microorganisms can then be introduced during the cooling process or during the modified atmosphere processing where the residual gasses in the closed container are replaced by the packaging gas. Consequently, it is possible to delay the modified atmosphere processing compared to standard processing where the MAP process is to be carried out relatively quickly after pasteurising in case any contaminants enter the food during the process.

Container systems according to embodiments described herein can be of the standard Gastronorm format and so are compatible with ovens, chill machines and MAP equipment which are already widely used in the catering and hospitality industries. Thanks to the gas-exchange regulating unit for regulating the flow path through the port, in combination with the sterile filter unit used in the container systems described herein, no increase in complexity is required for the machines used in the various steps required for the pasteurising and MAP processing used for prolonging the shelf life of pre-cooked foods.

Since the container is also used to cook the food, the filter unit should be able to withstand the cooking temperatures in embodiments where the cooking is done with the filter attached.

## Claims

1. A port (122) in a sheet or plate of rigid or semi-rigid material useable for fabricating a container (100) for cooking food, the port traversing the sheet or plate from a first surface through to a second, opposite, surface of the sheet or plate;
**characterised in that** the port comprises:
a gas-exchange regulation unit (130) comprising:
a body (132) being either hermetically mountable to the sheet or plate about and/or within the port (122) or formed by a part of the sheet or plate (932, 922), the body having at least one passage (139, 939) establishing a flow path for bidirectional gas exchange between a first end of the passage, at the first surface of the sheet or plate, and a second end of the passage, at the second surface of the sheet or plate; and
a passage closure arrangement (136) operable either to allow said flow path to be maintained or to prevent said flow path from being maintained thereby stopping any gas exchange through the port;
the port further comprising a filter unit (134) having at least one vent (140), the filter unit being mountable within said flow path, the filter unit being a sterile filter unit **in that** it comprises a gas-permeable microbial barrier element (150).

2. The port (122, 222, 322, 422, 522, 722, 922) according to claim 1, wherein said filter unit (134, 234, 334, 434, 534, 734, 934) is hermetically mountable about or within the passage (139, 239, 339, 539, 939), the gas-permeable barrier element (150, 250, 350, 450, 550, 750, 950) being located towards the first end of the passage, said passage closure arrangement (136, 236, 336, 436, 536, 736, 936) being configured to operate on at least a part of the passage towards its second end.

3. The port (1122, 1222, 1322, 1422) according to claim 1, wherein said filter unit (1134, 1234, 1334, 1434) is hermetically mountable about or within the passage (1139, 1339) the gas-permeable barrier element (1150, 1250, 1350) being located towards the second end of the passage, said passage closure arrangement (1136, 1236, 1336) being configured to operate on at least a part of the vent (1140, 1240, 1340, 1440) in the filter unit.

4. The port according to claim 2, wherein said passage closure arrangement comprises a regulating cap (336, 436) hermitically attachable to the body (332, 432) of the gas-exchange regulation unit (330, 430), the regulating cap having at least one through hole (337), the regulating cap being slidably or rotatably operable to either place the through hole in fluid communication with the passage (339) in the body (332) of the gas-exchange regulation unit (330) to allow said flow path to be maintained, or to place the through hole in fluid isolation from the passage in the body of the gas-exchange regulation unit to prevent said flow path from being maintained.

5. The port according to claim 2, wherein said passage closure arrangement comprises a stopper cap (136, 236, 736, 836, 936, 1036) hermetically attachable to the body (132, 232, 732, 832, 932, 1032) via a screw-thread or a push fitting, operable to stop said bidirectional gas exchange by sealing an opening of the second end of the passage (139, 239) when the stopper cap is screwed or pushed onto the body.

6. The port according to either of claims 2 or 3, wherein said passage closure arrangement comprises either said part of the passage towards its second end or said part of the vent, respectively, said part of the passage towards its second end or said part of the vent being deformable and configured to be operated by exerting a deforming pressure on parts of the passage or on parts of the vent, respectively, to close the flow path.

7. The port according to either of claims 2 or 3, wherein said passage closure arrangement comprises a sticker configured to be operated by:
adhesive bonding, chemical bonding, weld bonding or clamping to the body about an opening of the second end of the passage; or
adhesive bonding, chemical bonding, weld bonding or clamping to the filter unit about an opening of the vent.

8. The port according to either of claims 2 or 3, wherein said passage closure arrangement comprises:
a plug of solid material; or
a plug of a viscous, hardening, sealant material;
operable by insertion into the passage or into the vent, respectively, to seal the passage or the vent.

9. The port according to either of claims 2 or 3, wherein said passage closure arrangement comprises at least a part of a substantially tubular gas connector for receiving delivery of a gas from a gas source or for evacuating gas towards a gas sink, the gas connector being configured to be connected to an opening of said second end of the passage or an opening of said vent, operable by insertion of a plug of solid material or a plug of a viscous, hardening, sealant material into the passage or into the vent, respectively, to seal the passage or the vent.

10. The port according to either of claims 2 or 3, wherein said passage closure arrangement comprises at least a part of a substantially tubular gas connector for receiving delivery of a gas from a gas source or for evacuating gas towards a gas sink, the gas connector having at least a part which is sufficiently deformable to allow a part of the tube to become closed when a deforming pressure is exerted, the gas connector being configured to be connected to an opening of said second end of the passage or an opening of said vent, respectively, operable by exertion of a deforming pressure on parts of the gas connector to close and seal at least a part of the gas connector through adhesive bonding, chemical bonding, weld bonding or clamping together parts of the gas connector.

11. A lid system for covering a receptacle for receiving food in a container system (100, 200, 300, 400, 500, 600, 700, 800, 900, 1000, 1100. 1200, 1300, 1400) for cooking the food and/or preserving and/or regenerating or re-heating pre-cooked food, the lid system comprising a port (122, 222, 322, 422, 522, 622, 722, 822, 922, 1122, 1222, 1322, 1422) according to any of claims 1 to 10.

12. A container system (100, 200, 300, 400, 500, 600, 800, 700, 900, 1000, 1100. 1200, 1300, 1400) for cooking food and/or preserving and/or regenerating or re-heating pre-cooked food, the container system comprising:
a receptacle (110, 210, 310, 410, 510, 610, 710, 810, 910, 1010, 1110, 1210, 1310, 1410) in which to receive the food;
a lid (120, 220, 320, 420, 520, 620, 720, 820, 920, 1020, 1120, 1220, 1320, 1420) to cover the receptacle thus providing a closed container configuration having an interior and an exterior; and
a gasket (125, 225, 325, 425, 525, 625, 725, 825, 925, 1025, 1125, 1225, 1325, 1425) configured to provide a seal at an interface between the lid and the receptacle when the container system is in the closed container configuration;
**characterised in that** said container system comprises at least a first port (122, 222, 322, 422, 522, 622, 722, 822, 922, 1122, 1222, 1322, 1422) according to any of claims 1 to 10, said port being on said lid or on a wall of said receptacle.

13. A method for preserving food in a container system (100) according to claim 12, the method comprising:
placing the food in the receptacle (110);
heating the food and the receptacle for a length of time and at a temperature which are suitable to substantially reduce a microbial load within the receptacle;
subjecting the lid (120), the filter unit (124), the body of the gas-exchange regulation unit (130) and/or the passage closure arrangement of the gas-exchange regulation unit to a process which substantially reduces a microbial load of the lid, the filter unit, the body of the gas-exchange regulation unit and/or the passage closure arrangement of the gas-exchange regulation unit;
ensuring that the heated receptacle is closed by the treated lid and that a flow path for bidirectional gas-exchange through the gas-exchange regulation unit is established; and
cooling the food and the container system to a temperature which substantially maintains the microbial load within the receptacle at said reduced level.

14. The method according to claim 13, further comprising:
modifying a composition of a residual gas in the interior of the container system by introducing into the interior of the container system, via the first port (122), a packaging gas having a controlled composition; and
operating the passage closure arrangement (136) of the gas-exchange regulation unit to prevent said flow path from being maintained thereby stopping any gas exchange via the passage.

15. The method according to claim 14 when using the container system according to either of claims 9 or 10, wherein said operating of the passage closure arrangement to stop gas exchange via the passage is done while a positive differential pressure exists between the interior of the container system and the exterior of the container system.
